# EUROPÄISCHE PATENTSCHRIFT

(11) **EP 0 629 572 B1**
(45) Veröffentlichungstag und Bekanntmachung des Hinweises auf die Patenterteilung: **26.03.1997**
(21) Anmeldenummer: 94109276.9
(22) Anmeldetag: 16.06.1994
(51) Int. Cl.: B65G 47/90, B65B 21/12

(54) **Greifvorrichtung für Flaschen oder dergleichen**
Gripper device for bottles or the like
Dispositif de préhension pour bouteilles ou similaire

(30) Priorität: 16.06.1993 DE 4319879
(43) Veröffentlichungstag der Anmeldung: 21.12.1994
(73) Patentinhaber: TYROLON SCHULNIG GES.m.b.H & CO. KG., A-6395 Hochfilzen (AT)
(72) Erfinder: Schulnig, Ludwig, A-6361 Fieberbrunn (AT)
(74) Vertreter: Rupprecht, Kay, Dipl.-Ing.

(56) Entgegenhaltungen:
- DE-A- 4 103 729

## Beschreibung

Die Erfindung betrifft eine Greifvorrichtung für Flaschen oder dergleichen, mit mehreren Packtulpen, die ein Gehäuse mit einer Aufnahmeöffnung für die zu greifende Flasche sowie einen in der Aufnahmeöffnung umfangsseitig angeordneten elastischen Packtulpeneinsatz aufweisen, der zum Greifen der Flasche unter Krafteinwirkung einer Betätigungsvorrichtung in im wesentlichen radialer Richtung in die Aufnahmeöffnung eingreift.

Greifvorrichtungen dieser Art werden auch als "Packkopf" bezeichnet und dienen beispielsweise in der Getränkeindustrie dem Transport von Flaschen oder flaschenähnlichen Behältnissen aus einer Getränkekiste zu einer weiterverarbeitenden Maschine oder umgekehrt. Hierzu besitzt die Greifvorrichtung eine der Zahl der zu greifenden Flaschen entsprechende Anzahl an Packtulpen, die als Packkopf zusammengestellt beispielsweise über einem zwanziger Flaschenkasten so positioniert werden, daß die Flaschenhälse beim Absenken des Packkopfes in die Aufnahmeöffnungen der Packtulpen eingeführt werden. Das Greifen der Flaschen oder der flaschenähnlichen Behältnisse erfolgt - je nach Art des Behältnisses bzw. genauer: je nach Beschaffenheit des Flaschenhalses bzw. des Gefäßteils unterhalb des Gefäßverschlusses - auf zwei unterschiedliche Arten. Bei Flaschen mit dem üblichen schlanken Flaschenhals greift jeder Packtulpeneinsatz unter der Krafteinwirkung der Betätigungsvorrichtung dadurch in die Aufnahmeöffnung ein und beklemmt den Flaschenhals, daß der Packtulpeneinsatz eine die lichte Querschnittsfläche der Aufnahmeöffnung verjüngende reversible Verformung erfährt. Bei anderen Behältnissen ohne besonders ausgebildeten Hals erfolgt das Greifen dadurch, daß der Packtulpeneinsatz ebenfalls unter der Krafteinwirkung der Betätigungsvorrichtung mittels Greifklauen unter den Schraubverschluß oder einen Kragenwulst des Behältnisses greift. Diese Greifklauen sind am unteren Stirnrand des Packtulpeneinsatzes ausgebildet und greifen bei axialer Krafteinwirkung der Betätigungsvorrichtung aufgrund der konischen Ausbildung eines Ringsockels des Packtulpengehäuses, welcher die Aufnahmeöffnung begrenzt, in im wesentlichen radialer Richtung in die Aufnahmeöffnung ein, während der Packtulpeneinsatz in axialer Richtung im wesentlichen formstabil bleibt. Die gegriffenen Flaschen werden sodann aus dem Flaschenkasten herausgehoben und zu einer weiterverarbeitenden Maschine transportiert. Nach dem Transport der Flaschen wird die auf den flexiblen Packtulpeneinsatz wirkende Kraft gelöst, woraufhin jeder Packtulpeneinsatz wieder seine ursprüngliche Form unter Vergrößerung der lichten Querschnittsfläche der Aufnahmeöffnung einnimmt und somit den Flaschenhals bzw. das flaschenartige Behältnis aus der Beklemmung bzw. aus dem unterhakenden Griff der Greifklauen frei gibt. Dann wird der Packkopf angehoben, so daß die Flaschenhälse bzw. die oberen Abschnitte der Behältnisse die Aufnahmeöffnungen der Packtulpen verlassen.

Während ein bekanntes Problem bei Greifvorrichtungen der eingangs genannten Art in der Verschleißanfälligkeit der Packtulpeneinsätze besteht, das beispielsweise in der DE-OS 41 03 729 beschrieben ist, liegt ein weiteres Problem darin, die Betätigungsvorrichtungen zum Aktivieren und Deaktivieren der Packtulpeneinsätze möglichst einfach und kompakt zu konstruieren. Dies ist zum einen deshalb wünschenswert, da für den Durchmesser jeder einzelnen Packtulpe eines Packkopfes im wesentlichen nur so viel Raum zur Verfügung steht, wie von der schmalsten mit der Greifvorrichtung zu greifenden Flasche zur Verfügung steht. Dieses Erfordernis führte zu bekannten Entwicklungen von Betätigungsvorrichtungen, die in axialer Richtung auf jeden Packtulpeneinsatz wirken und führte weg von konstruktiven Lösungen, die beispielsweise pneumatisch am Umfang des Packtulpeneinsatzes in im wesentlichen radialer Richtung wirken. Solche Lösungen sind beispielsweise aus der DE-PS 23 46 430, der FR 1 044 075, der GB 747 138 oder auch der GB 1 001 327 bekannt. Desweiteren ist eine möglichst einfache und kompakte Betätigungsvorrichtung für die Packtulpeneinsätze deshalb wünschenswert, um das Eigengewicht des Packkopfes sowie dessen Energiebedarf im Betrieb möglichst gering zu halten.

Greifvorrichtungen der eingangs genannten Art sind beispielsweise aus der DE-OS 41 03 729, der DE-OS 38 19 598 sowie aus der DE-PS 1 096 824 bekannt. Allen drei bekannten Greifvorrichtungen ist gemeinsam, daß die Betätigungsvorrichtung im wesentlichen in Art einer Kolben/Zylinder-Anordnung aufgebaut ist, wobei der Kolben entweder mechanisch, beispielsweise über einen Exzenter (DE '729), oder unter der Wirkung eines Druckmittels (DE '598) in axialer Richtung bewegt wird.

Die Nachteile jener bekannten Greifvorrichtungen bestehen insbesondere darin, daß der Aufbau der Betätigungsvorrichtungen zu aufwendig und zu platzeinnehmend ist, was einen zu großen Überbau über den einzelnen Packtulpen erfordert. Hinsichtlich der DE '824 und der DE '598 wirkt sich dies insbesondere beim Zusammenschluß mehrerer Packtulpen zu einem Packkopf nachteilig aus, da bei jenen Konstruktionen beispielsweise zwanzig Druckschläuche eines zwanziger Packkopfes an der zentralen Aufhängung des Packkopfes zusammengeführt werden müssen, was eine entsprechende Anzahl von Anschlüssen beidseitig der Leitungen erfordert. Wenngleich aus der DE '729 hierzu bereits eine zentrale Betätigung aller Packtulpeneinsätze eines Packkopfes bekannt ist, hat sich jedoch die dort zunächst vorgeschlagene Exzenter-Lösung zur Ausführung der Hubbewegung der Packtulpeneinsätze als zu aufwendig und zu platzeinnehmend erwiesen, da auch ein solcher Exzenter ja durch eine entsprechende Vorrichtung bewegt werden muß.

Die vorliegende Erfindung setzt somit an dem Problem an, eine möglichst einfache und kompakte Betätigungsvorrichtung zum Aktivieren und Deaktivieren der Packtulpeneinsätze zu finden sowie insgesamt eine wettbewerbsfähigere Greifvorrichtung anbieten zu können.

Ausgehend von einer Greifvorrichtung für Flaschen oder dergleichen mit mehreren Packtulpen, die ein Gehäuse mit einer Aufnahmeöffnung für die zu greifende Flasche sowie einen in der Aufnahmeöffnung umfangsseitig angeordneten elastischen Packtulpeneinsatz aufweisen, der zum Greifen der Flasche unter Krafteinwirkung einer Betätigungsvorrichtung in im wesentlichen radialer Richtung in die Aufnahmeöffnung eingreift, wird das gestellte Problem dadurch gelöst, daß die Betätigungsvorrichtung eine druckmittelbeaufschlagbare Membran enthält, welche in axialer Richtung auf die obere Stirnfläche des Packtulpeneinsatzes wirkt.

Die Vorteile der Erfindung liegen insbesondere darin, daß mit dieser Konstruktion ein überaus geringer Überbau über jedem Packtulpengehäuse erforderlich ist, da die druckmittelbeaufschlagbare Membran nur eine geringe Stärke aufzuweisen braucht und ansonsten keinerlei druckfeste Abdichtungen des Packtulpengehäuses erforderlich sind. Die erfindungsgemäße Membran kann beispielsweise in einem Deckel des Packtulpengehäuses untergebracht sein, der mit dem Packtulpengehäuse fest verschraubbar ist. Besonders vorteilhaft wirkt sich die erfindungsgemäße Lösung beim Zusammenschluß mehrerer Packtulpen in einem einzigen Block aus, wie es bereits aus der DE-OS 41 03 729 bekannt ist. Auf diese bevorzugte Weiterbildung wird nachstehend noch eingegangen werden.

Bevorzugte Weiterbildungen der Erfindung sind in den Unteransprüchen angegeben.

So ist zur Befestigung der Membran an dem Packtulpengehäuse bzw. an einem dazugehörigen Deckel vorzugsweise eine Befestigungsmanschette vorgesehen, innerhalb derer gemäß einer weiteren Weiterbildung eine Distanzplatte angeordnet ist, mittels welcher die Membran auf die Stirnfläche des Packtulpeneinsatzes wirkt. Die Befestigungsmanschette, die beispielsweise in Art eines Rings ausgebildet sein kann, hat den Vorteil, daß die Membran flächig und verschleißarm befestigt ist. Die Distanzplatte innerhalb der Manschette reduziert in besonders vorteilhafter Weise den durch die Materialstärke der Befestigungsmanschette entstehenden Totraum oder Tothub, den die Membran bei Beaufschlagung mit einem Druckmittel ausführen müßte, bevor sie auf die obere Stirnfläche des Packtulpeneinsatzes wirken kann.

In besonders bevorzugter Weise ist vorgesehen, daß die Höhe der Distanzplatte, welche ihrer Materialstärke entspricht, die Höhe bzw. Stärke der Befestigungsmanschette um ein definiertes Restspielmaß unterschreitet. Dieses Restspielmaß kann wenige Zehntel Millimeter betragen und stellt den letztlich verbleibenden Tothub dar, den die Membran ausführen muß, bevor sie den Packtulpeneinsatz aktivieren kann. Die Reduzierung des Hubs auf fast Null bringt den großen Vorteil mit sich, daß die Membran nur eine sehr geringe Dehnung ausführen muß, was sich wesentlich auf ihre Haltbarkeit und damit auf die Verschleißarmut der erfindungsgemäßen Greifvorrichtung auswirkt. Die Membran selbst besteht vorzugsweise aus gewebeverstärktem Gummituch und wird pneumatisch betätigt.

Während es bei den eingangs beschriebenen Packtulpeneinsätzen mit den Greifklauen zum Greifen von mehr oder weniger halslosen flaschenartigen Behältnissen möglich ist, den Packtulpeneinsatz direkt mit der axial wirkenden Kraft zu deren Betätigung zu beaufschlagen, ist es bei den anderen Packtulpeneinsätzen, die eine konkave, die Aufnahmeöffnung der Packtulpe verjüngende Verformung erfahren, von großem Vorteil, wenn der Packtulpeneinsatz teilweise in einem axial beweglichen becherförmigen Kolben aufgenommen ist, dessen freier Rand sich im Ruhezustand der Greifvorrichtung etwa in Höhe des Einknickumfangs des Packtulpeneinsatzes befindet. Durch diesen becherförmigen Kolben erfährt der flexible Packtulpeneinsatz zum einen eine sichere Führung in axialer Richtung und zum anderen wird das Einknicken des Packtulpeneinsatzes in den Innenraum der Aufnahmeöffnung zum Beklemmen eines eingeführten Flaschenhalses wirksam unterstützt. Während der freie Rand beim Aktivieren des Packtulpeneinsatzes, d.h. bei einer axialen Abwärtsbewegung des becherförmigen Kolbens, keine nennenswerte Funktion hat, übt dieser freie Rand im Ruhezustand der Greifvorrichtung eine gewisse Vorspannung des Packtulpeneinsatzes in radialer Richtung in die Aufnahmeöffnung hinein aus. Diese Vorspannung ermöglichst es auch, einfache gerade zylindrische Packtulpeneinsätze zu verwenden, wodurch die bekannten Nachteile der doppel-kegelstumpfförmigen Formen vermieden werden.

Zur weiteren Unterstützung der beschriebenen Wirkung des freien Randes des becherförmigen Kolbens ist in besonders vorteilhafter Weise vorgesehen, daß er einen radial einwärts gerichteten Umfangswulst aufweist. Dieser Umfangswulst verstärkt die Vorspannung des Packtulpeneinsatzes im Ruhezustand der Greifvorrichtung und wirkt auch beim Betätigen der Greifvorrichtung zur Unterstützung des Einknickens des Packtulpeneinsatzes mit.

Da es vorkommt, daß in einem Flaschenkasten Flaschen mit ungleicher Flaschenhöhe angeliefert werden ist es wünschenswert, daß trotzdem alle Flaschen eines Kastens zuverlässig mit dem Packkopf gegriffen werden. Um dies zu ermöglichen ist vorzugsweise vorgesehen, daß der becherförmige Kolben einen umlaufenden Innensockel aufweist, auf dem der Packtulpeneinsatz mit seinem oberen Stirnrand anliegt, so daß der Packkopf nötigenfalls auch tiefer abgesenkt werden kann, um eine Flasche geringerer Höhe zu greifen, während die größeren Flaschen dann mit ihren Flaschenhälsen tiefer in die Aufnahmeöffnung der Packtulpen hineinragen.

Für eine Greifvorrichtung gemäß der DE-OS 41 03 729, bei der die Packtulpengehäuse in einer der Anzahl gleichzeitig zu greifender Flaschen entsprechenden Zahl einstückig in einem Block als sogenannter "Kompaktgreifer" ausgebildet sind, und bei der die Packtulpeneinsätze aller Packtulpen gemeinsam mit der zum Greifen der Flaschen bzw. flaschenähnlichen Behältnisse erforderlichen Kraft beaufschlagt werden, ist bevorzugterweise vorgesehen, daß der Block ein Unterteil der Greifvorrichtung bildet, auf dem ein deckelartiges Oberteil sitzt, und daß die Membran an der Innenseite des Oberteils befestigt ist und mittels einer in axialer Richtung bewegbaren, frei schwimmenden Platte auf die Packtulpeneinsätze wirkt. Hierbei ist das deckelartige Oberteil selbstverständlich mittels Verschraubungen auf dem Unterteil befestigt. Um zu vermeiden, daß sich die bewegbare Platte verkantet kann vorgesehen sein, daß diese durch axiale Stifte, die in Bohrungen der beweglichen Platte eingreifen, geführt sind. Wird das Oberteil zu Wartungs- oder Instandsetzungsarbeiten von dem Unterteil abgeschraubt, so kann die bewegbare Platte ohne weiteres herausgenommen werden; eine mechanische Verbindung zwischen den Packtulpeneinsätzen bzw. den becherförmigen Kolben und der Platte besteht nicht. Wurde die Platte heruntergenommen, können die becherförmigen Kolben oder - bei der alternativen Ausführungsform - die axial formstabilen Packtulpeneinsätze nach oben aus dem Packtulpengehäuse herausgenommen und gegebenenfalls ausgetauscht werden. Zum Auswechseln der sich konkav verjüngenden, wesentlich flexibleren Packtulpeneinsätze ist es nicht erforderlich, das Oberteil abzubauen. Diese können durch die Aufnahmeöffnung eingesetzt und herausgenommen werden. Der große Vorteil des so ausgebildeten Kompaktgreifers besteht nicht nur in seiner Kompaktheit, sondern insbesondere auch in dem wesentlich geringeren Energieverbrauch zum Betrieb, verglichen mit herkömmlichen Packköpfen.

Es ist aus dem vorstehend genannten Stand der Technik ebenfalls bekannt, die flexiblere Form des Packtulpeneinsatzes (konkave Verformung) zur Steigerung der Flexibilität und damit zur Erhöhung der Einknicksicherheit mit mehreren über den Umfang verteilten Durchbrüchen im Mantel des Packtulpeneinsatzes zu versehen. Zur weiteren Senkung der Verschleißanfälligkeit der Greifvorrichtung ist vorzugsweise vorgesehen, daß die Durchbrüche zum Innenraum der Aufnahmeöffnung hin mittels einer Schutzschicht abgetrennt sind, wobei diese Schutzschicht in besonders bevorzugter Weise einstückig mit dem Packtulpeneinsatz ausgebildet ist. Somit bilden die aus dem Stand der Technik bekannten Durchbrüche lediglich Ausnehmungen innerhalb des Mantels des Packtulpeneinsatzes, so daß ein Hinterhaken von Resten der Flaschenverschlüsse wirksam vermieden wird. Ferner hat die Erfahrung mit Packtulpeneinsätzen, die Durchbrüche aufweisen, gezeigt, daß diese eine den Flaschenhals umgebende Staniolverpackung bei frisch staniolierten Flaschen häufig beschädigen, da die Innenränder der Durchbrüche beim Einknicken des Packtulpeneinsatzes relativ harte Kanten entstehen lassen.

Im folgenden wird ein bevorzugtes Ausführungsbeispiel einer Greifvorrichtung mit zwei alternativen Packtulpeneinsätzen anhand einer Zeichnung näher erläutert.

Es zeigen:
- Fig. 1: eine schematische Ansicht der Greifvorrichtung, teilweise im Querschnitt;
- Fig. 2: eine vergrößerte Darstellung des linken Teils der Fig. 1, teilweise im Querschnitt;
- Fig. 3: einen Querschnitt durch einen Teil der Greifvorrichtung gemäß Fig. 1 im Umfang einer Packtulpe gemäß einer ersten Ausführungsform, im Betriebszustand;
- Fig. 4: einen Querschnitt entsprechend Fig. 3, jedoch mit einer zweiten Ausführungsform einer Packtulpe;
- Fig. 5: einen Längsschnitt durch einen doppel-kegelstumpfförmigen Packtulpeneinsatz zur Verwendung in einer Packtulpe gemäß Fig. 3; und
- Fig. 6: einen Querschnitt durch den Packtulpeneinsatz gemäß Fig. 5 entlang der Linie VI - VI.

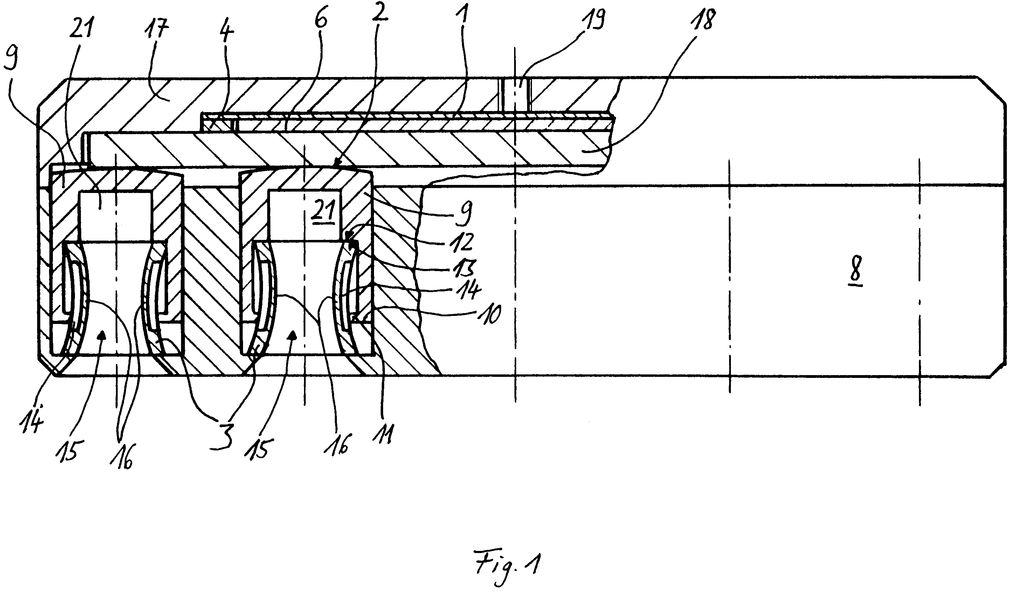

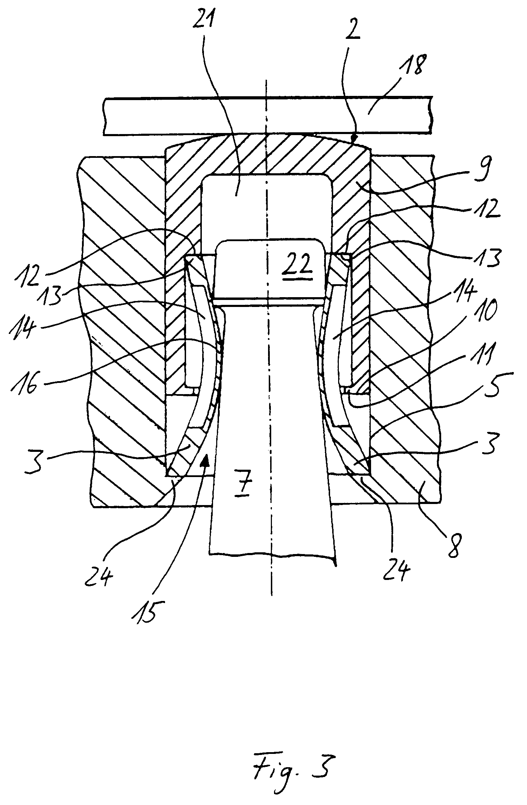

Fig. 1 zeigt eine teilweise im Querschnitt dargestellte Ansicht einer Greifvorrichtung für Flaschen, die als "Kompaktgreifer" zur gleichzeitigen Aufnahme von zwanzig Flaschen ausgeführt ist. Das Kernstück dieses Kompaktgreifers bildet ein Block 8, der - entsprechend der Anordnung der Flaschen in einem zwanziger Flaschenkasten - fünf mal vier Bohrungen zur Bildung von zwanzig Packtulpengehäusen 5 besitzt. Zur Vereinfachung sind hier nur zwei Packtulpengehäuse 5 dargestellt. Jede durch das Packtulpengehäuse 5 definierte Packtulpe besitzt eine Aufnahmeöffnung 15 zur Aufnahme des (nicht dargestellten) Flaschenhalses einer zu greifenden Flasche sowie einen in der Aufnahmeöffnung 15 umfangsseitig angeordneten elastischen Packtulpeneinsatz 3, der im Grunde eine gerade, zylindrische Form aufweist, jedoch sobald er in das Packtulpengehäuse eingesetzt ist, eine gewisse radiale Vorspannung erfährt, was zu einer konkaven, die Aufnahmeöffnung 15 verjüngenden Verformung des Packtulpeneinsatzes 3 führt. Diese Vorspannung wird durch einen Umfangswulst 11 an dem freien Rand 10 eines Kolbens 9 erzeugt, in welchem der Packtulpeneinsatz 3 teilweise aufgenommen ist. Der Kolben 9 ist becherförmig ausgebildet und axial beweglich in das Packtulpengehäuse 5 eingesetzt. Jeder Packtulpeneinsatz 3 liegt mit seinem unteren Stirnrand an einem radial einwärts in die Aufnahmeöffnung 15 hineinragenden Ringsockel 24 axial an, und mit seinem oberen Stirnrand 13 an einem Innensockel 12 des Kolbens 9. Durch die Abstützung des Packtulpeneinsatzes 3 auf dem Innensockel 12 entsteht oberhalb des Packtulpeneinsatzes ein Hohlraum 21, in welchen größere Flaschen mit ihrem Flaschenhals hineinragen können (siehe Fig. 3). Dieser Hohlraum 21 ist insbesondere dann von großer Wichtigkeit, wenn ein Flaschenkasten mit Flaschen unterschiedlicher Größe angeliefert wird, bei dem der Kompaktgreifer dann tiefer abgesenkt können werden muß, um die kleineren Flaschen zu greifen, wodurch die größeren Flaschen mit ihren Hälsen tiefer in die Aufnahmeöffnungen 15 der anderen Packtulpen eingreifen.

Die Packtulpeneinsätze 3 besitzen in an sich bekannter Art und Weise mehrere über ihren Umfang verteilte Durchbrüche 14 in dem zylindrischen Mantel, die gemäß der vorliegenden Erfindung zum Innenraum des Packtulpeneinsatzes 3 hin mittels einer Schutzschicht 16 abgetrennt sind. Diese Schutzschicht 16 ist einstückig mit dem Packtulpeneinsatz 3 ausgebildet, so daß die Durchbrüche 14 lediglich nur noch Ausnehmungen in dem Mantel des Packtulpeneinsatzes sind.

Der Block 8 mit den Packtulpengehäusen 5 sowie den Kolben 9 und den Packtulpeneinsätzen 3 bildet ein Unterteil der Greifvorrichtung, mit dem ein deckelartiges Oberteil 17 verschraubt ist. Auf der Innenseite des Oberteils 17 ist eine Membran 1 aus gewebeverstärktem Gummituch mittels einer ringförmigen Befestigungsmanschette 4 aus Metall befestigt. Die Membran 1 kann durch einen Druckmitteleinlaß 19 mittels eines Druckmittels, vorzugsweise mittels Druckluft, beaufschlagt werden, wodurch die Membran 1 mittels einer Distanzplatte 6, die innerhalb der ringförmigen Befestigungsmanschette 4 angeordnet ist, über eine in axialer Richtung bewegbare Platte 18 auf die Kolben 9 aller Packtulpen gleichzeitig wirkt. Die Platte 18 liegt frei schwimmend auf den Stirnflächen 2 der Kolben 9 auf und kann nach Abnehmen des Oberteils 17 zum Auswechseln der Kolben 9 frei von dem Unterteil 8 heruntergenommen werden. Auch die Distanzplatte 6 ist frei schwimmend zwischen der Membran 1 und der Platte 18 aufgenommen und besitzt eine Höhe bzw. Materialstärke, welche die Höhe bzw. Materialstärke der ringförmigen Befestigungsmanschette 4 um ein definiertes Restspielmaß von wenigen Zehntel Millimetern unterschreitet. Durch die Einfügung der Distanzplatte 6 und die beschriebene Dimensionierung wird der Tothub der Membran 1 auf das beschriebene Restspielmaß reduziert, der ansonsten die gesamte Höhe der Befestigungsmanschette 4 betragen würde.

Zum Greifen von Flaschen mit dieser ersten Ausführungsform von Packtulpeneinsätzen, wie sie auch in Fig. 3 dargestellt ist, wird durch den Druckmitteleinlaß 19 Druckluft auf die Membran 1 gegeben, woraufhin die Membran 1 über die Distanzplatte 6 und die Platte 18 die Kolben 9 aller Packtulpen axial nach unten bewegt, woraufhin sich die Packtulpeneinsätze 3 konkav verformen, dabei die lichte Querschnittsfläche der Aufnahmeöffnungen 15 verjüngen und eine eingeführte Flasche 7 (Fig. 3) beklemmen.

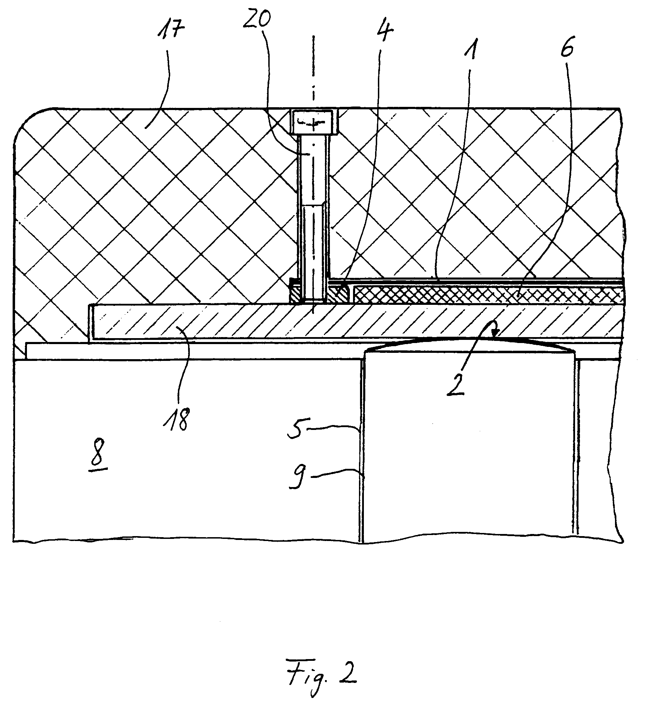

Fig. 2 zeigt einen vergrößerten Ausschnitt des linken Teils der Fig. 1, jedoch mit nur einem schematisch dargestellten Kolben 9 und einem Packtulpengehäuse 5. Anhand dieser Darstellung wird deutlich, daß die Membran 1 mittels der ringförmigen Befestigungsmanschette 4 durch Schrauben 20 an dem deckelartigen Oberteil 17 der Greifvorrichtung befestigt ist. Diese Befestigungsart ist insofern von Vorteil, da die Befestigungsmanschette 4 die Membran mit deren Rand flächig unter Wirkung der Schrauben 20 gegen die Innenseite des Oberteils 17 preßt. Ferner ist anhand dieser Darstellung das minimale Restspielmaß zwischen Membran 1 und Distanzplatte 6 erkennbar, welches dazu führt, daß die Membran 1 bei Beaufschlagung mit der Druckluft geringstmöglich gedehnt wird. Die Distanzplatte 6 und die Platte 18 können beispielsweise aus härterem Kunststoff bestehen, was das Gesamtgewicht des Kompaktgreifers wesentlich reduziert.

Fig. 3 zeigt die vergrößerte Querschnitts-Darstellung eines in dem Block ausgebildeten Packtulpengehäuses 5 gemäß Fig. 1. Diese Packtulpe ist mit einer ersten, besonders flexiblen Ausführungsform eines Packtulpeneinsatzes 3 ausgerüstet, der zum Greifen einer in die Aufnahmeöffnung 15 eingeführten Flasche 7 durch die axiale Abwärtsbewegung des Kolbens 9 eine konkave Verformung in die Aufnahmeöffnung 15 hinein erfährt, wodurch der Hals der Flasche 7 beklemmt wird. Die Verschlußkappe 22 der Flasche 7 ragt teilweise in den Hohlraum 21 des becherförmigen Kolbens 9 hinein, da die Greifvorrichtung beispielsweise etwas tiefer abgesenkt werden mußte, um auch kleinere Flaschen greifen zu können.

Der Packtulpeneinsatz 3 stützt sich mit seinem unteren Stirnrand auf dem Ringsockel 24 des Packtulpengehäuses 5 ab, und mit seinem oberen Stirnrand 13 auf dem Innensockel 12 des Kolbens 9. Ferner werden anhand dieser Darstellung die Schutzschichten 16 deutlich, welche die Ausnehmungen 14 zum Innenraum des Packtulpeneinsatzes 3 begrenzen. Somit liegt der Packtulpeneinsatz 3 mit seiner Innenmantelfläche sanft an dem Flaschenhals an und schont dadurch die Staniolverpackung frisch staniolierter Flaschen. Desweiteren verhindern die Schutzschichten 16, daß sich die häufig anzutreffenden Reste von Kunststoffringen, welche zu der Verschlußkappe 22 gehören, in den Packtulpeneinsätzen verhaken.

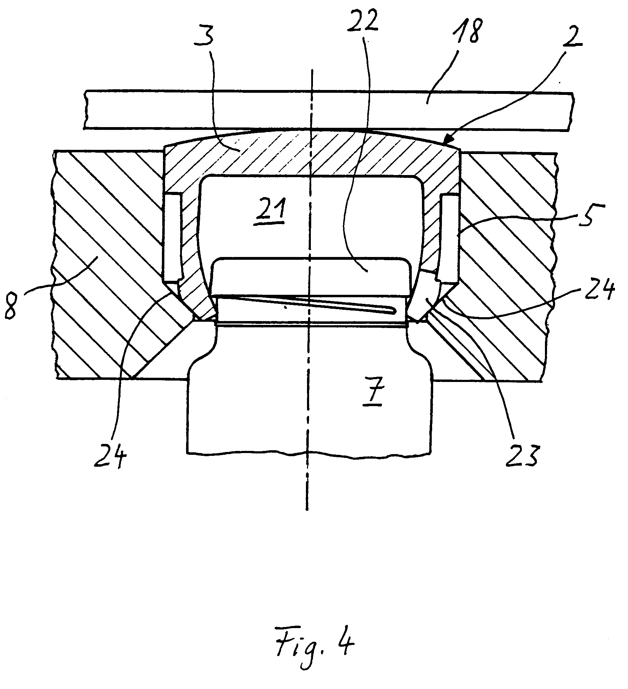

Fig. 4 zeigt eine andere Ausführungsform eines Packtulpeneinsatzes 3, der in axialer Richtung im wesentlichen formstabil ist und deshalb auch ohne einen Kolben 9 auskommt. Dieser Packtulpeneinsatz 3 dient zum Greifen von solchen flaschenartigen Behältnissen, die gar keinen Flaschenhals aufweisen, oder aber nur einen schwach ausgebildeten, wie in der Figur dargestellt. Dieser Packtulpeneinsatz besitzt im Unterschied zu dem Packtulpeneinsatz gemäß der Fig. 3 eine becherförmige Ausgestaltung und weist an seinem unteren Stirnrand Greifklauen 23 auf, die über den Umfang des unteren Stirnrands mit Abstand zueinander verteilt sind. Diese Greifklauen 23 bewegen sich bei einer axialen Abwärtsbewegung des Packtulpeneinsatzes 3 entlang des konischen Ringsockels 24 in die Aufnahmeöffnung der Packtulpe hinein und untergreifen somit die Verschlußkappe 22 des flaschenartigen Behältnisses 7 oder einen dort angeordneten Ringwulst.

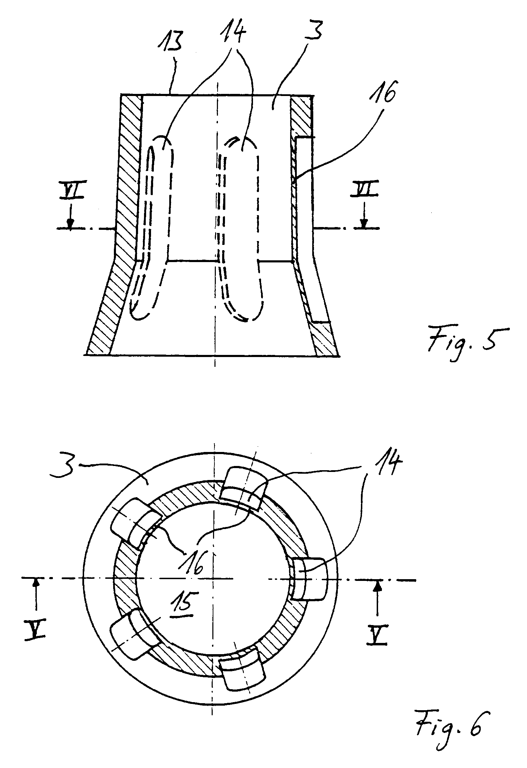

Fig. 5 zeigt einen Längsschnitt durch einen flexiblen, sich konkav verformenden Packtulpeneinsatz 3, der hier als weitere alternative Ausgestaltungsform eine doppel-kegelstumpfförmige Form besitzt. Anhand dieser Darstellung werden nochmals die Durchbrüche 14 im Mantel des Packtulpengehäuses 3 deutlich, die allerdings keine echten Durchbrüche sind, sondern lediglich Ausnehmungen, die gegen den Innenraum 15 des Packtulpeneinsatzes 3 jeweils durch die Schutzschicht 16 abgegrenzt sind.

Fig. 6 zeigt einen Schnitt längs der Linie VI - VI der Fig. 5 zur weiteren Verdeutlichung der Gestalt dieses Ausführungsbeispiels eines Packtulpeneinsatzes.

## Patentansprüche

1. Greifvorrichtung für Flaschen oder dergleichen, mit mehreren Packtulpen, die ein Gehäuse (5) mit einer Aufnahmeöffnung (15) für die zu greifende Flasche (7) sowie einen in der Aufnahmeöffnung umfangsseitig angeordneten elastischen Packtulpeneinsatz (3) aufweisen, der zum Greifen der Flasche (7) unter Krafteinwirkung einer Betätigungsvorrichtung in im wesentlichen radialer Richtung in die Aufnahmeöffnung (15) eingreift,
dadurch gekennzeichnet,
daß die Betätigungsvorrichtung eine druckmittelbeaufschlagbare Membran (1) enthält, welche in axialer Richtung auf die obere Stirnfläche (2) des Packtulpeneinsatzes (3) wirkt.

2. Greifvorrichtung nach Anspruch 1,
dadurch gekennzeichnet,
daß die Membran (1) durch eine Befestigungsmanschette (4) an dem Packtulpengehäuse (5) befestigt ist.

3. Greifvorrichtung nach Anspruch 2,
dadurch gekennzeichnet,
daß innerhalb der Manschette (4) eine Distanzplatte (6) angeordnet ist, mittels derer die Membran (1) auf die Stirnfläche (2) des Packtulpeneinsatzes (3) wirkt.

4. Greifvorrichtung nach Anspruch 3,
dadurch gekennzeichnet,
daß die Höhe der Distanzplatte (6) die Höhe der Befestigungsmanschette (4) um ein definiertes Restspielmaß unterschreitet.

5. Greifvorrichtung nach einem der Ansprüche 1 bis 4,
dadurch gekennzeichnet,
daß der Packtulpeneinsatz (3) teilweise in einem axial beweglichen becherförmigen Kolben (9) aufgenommen ist, dessen freier Rand (10) sich im Ruhezustand der Greifvorrichtung etwa in Höhe des Einknickumfangs des Packtulpeneinsatzes (3) befindet.

6. Greifvorrichtung nach Anspruch 5,
dadurch gekennzeichnet,
daß der freie Rand (10) einen radial einwärts gerichteten Umfangswulst (11) aufweist.

7. Greifvorrichtung nach Anspruch 5 oder 6,
dadurch gekennzeichnet, daß der becherförmige Kolben (9) einen umlaufenden Innensockel (12) aufweist, auf dem der Packtulpeneinsatz (3) mit seinem oberen Stirnrand (13) anliegt.

8. Greifvorrichtung nach einem der vorstehenden Ansprüche, bei der die Packtulpengehäuse (5) in einer der Anzahl gleichzeitig zu greifender Flaschen (7) entsprechenden Zahl einstückig in einem Block (8) ausgebildet sind, und die Packtulpeneinsätze (3) aller Packtulpen (5) gemeinsam mit der zum Greifen der Flaschen erforderlichen Kraft beaufschlagt werden,
dadurch gekennzeichnet,
daß der Block (8) ein Unterteil der Greifvorrichtung bildet, auf dem ein deckelartiges Oberteil (17) sitzt, und daß die Membran (1) an der Innenseite des Oberteils (17) befestigt ist und mittels einer in axialer Richtung bewegbaren Platte (18) auf die Packtulpeneinsätze (3) wirkt.

9. Greifvorrichtung nach einem der vorstehenden Ansprüche, mit einem Packtulpeneinsatz (3), der mehrere über den Umfang verteilte Durchbrüche (14) aufweist,
dadurch gekennzeichnet,
daß die Durchbrüche (14) zum Innenraum des Packtulpeneinsatzes (3) hin mittels einer Schutzschicht (16) abgetrennt sind.

10. Greifvorrichtung nach Anspruch 9,
dadurch gekennzeichnet,
daß die Schutzschicht (16) einstückig mit dem Packtulpeneinsatz (3) ausgebildet ist.

## Claims

1. Gripper device for bottles or the like with a plurality of grab arms which have a housing (5) with a receiving aperture (15) for the bottle (7) to be gripped as well as a resilient grab arm insert (3) disposed in the receiving aperture on the perimeter, which insert, through the operation of an actuating device, engages in an essentially radial direction in the receiving aperture (15) in order to grip the bottle (7),
**characterised in that**
the actuating device contains a pressure-responsive membrane (1) which acts in an axial direction on the upper front surface (2) of the grab arm insert (3).

2. Gripper device according to claim 1,
**characterised in that**
the membrane (1) is fastened to the grab arm housing (5) by a fastening collar (4).

3. Gripper device according to claim 2,
**characterised in that**
inside the collar (4) a distance plate (6) is arranged by means of which the membrane (1) acts on the front surface (2) of the grab arm insert (3).

4. Gripper device according to claim 3,
**characterised in that**
the height of the distance plate (6) is lower than that of the fastening collar (4) by a defined residual clearance.

5. Gripper device according to one of claims 1 to 4,
**characterised in that**
the grab arm insert (3) is partially contained in a hemispherical piston (9) which can be moved axially and whose free edge (10), when the gripper device is non-operative, is located approximately at the height of a bending perimeter of the grab arm insert (3).

6. Gripper device according to claim 5,
**characterised in that**
the free edge (10) has a circumferential bead (11) directed radially inwards.

7. Gripper device according to claim 5 or 6,
**characterised in that**
the hemispherical piston (9) has a rotating inner base (12) to which the grab arm insert (3) adjoins with its lower front edge (13).

8. Gripper device according to one of the preceding claims, in which the grab arm housings (5) are designed in a block as one piece in a number corresponding to the number of bottles (7) to be gripped simultaneously, and the grab arm inserts (3) of all grab arms (5) are impinged on together with the necessary force for gripping the bottles,
**characterised in that**
the block (8) forms a lower portion of the gripper device on which a cover-like upper portion (17) sits, and that the membrane (1) is fastened to the inner side of the upper portion (17) and acts on the grab arm inserts (3) by means of a plate (18) which can be moved in an axial direction.

9. Gripper device according to one of the preceding claims, with a grab arm insert (3) which has a plurality of breaks (14) distributed over the perimeter,
**characterised in that**
the breaks (14) are separated from the interior of the grab arm insert (3) by means of a protective layer (16).

10. Gripper device according to claim 9,
**characterised in that**
the protective layer (16) is designed as of one piece with the grab arm insert (3).

## Revendications

1. Dispositif de préhension pour des bouteilles ou similaires, comportant plusieurs organes de saisie femelles qui présentent un boîtier (5) avec une ouverture de réception (15) pour la bouteille (7) à saisir, ainsi qu'un insert de saisie élastique (3) qui est agencé en sens périphérique dans l'ouverture de réception et qui s'engage sensiblement en direction radiale dans l'ouverture de réception (15) pour saisir la bouteille (7) sous l'action de la force d'un dispositif d'actionnement, caractérisé en ce que le dispositif d'actionnement comporte un diaphragme (1) susceptible d'être sollicité par un fluide sous pression, qui agit en direction axiale sur la surface frontale supérieure (2) de l'insert de saisie (3).

2. Dispositif de préhension selon la revendication 1, caractérisé en ce que le diaphragme (1) est fixé par un manchon de fixation (4) sur le boîtier de saisie (5).

3. Dispositif de préhension selon la revendication 2, caractérisé en ce qu'il est prévu à l'intérieur du manchon (4) une plaque d'écartement (6) au moyen de laquelle le diaphragme (1) agit sur la surface frontale (2) de l'insert de saisie (3).

4. Dispositif de préhension selon la revendication 3, caractérisé en ce que la hauteur de la plaque d'écartement (6) est inférieure d'une valeur de marge définie à la hauteur du manchon de fixation (4).

5. Dispositif de préhension selon l'une quelconque des revendications 1 à 4, caractérisé en ce que l'insert de saisie (3) est reçu partiellement dans un piston (9) axialement mobile et en forme de godet, dont la bordure libre (10) se trouve, à l'état de repos du dispositif de préhension, approximativement à la hauteur de la périphérie d'infléchissement de l'insert de saisie (3).

6. Dispositif de préhension selon la revendication 5, caractérisé en ce que là bordure libre (10) présente un bourrelet périphérique (11) dirigé radialement vers l'intérieur.

7. Dispositif de préhension selon l'une ou l'autre des revendications 5 et 6, caractérisé en ce que le piston (9) en forme de godet présente un socle ultérieur périphérique (12) qui s'appuie par sa bordure frontale supérieure (13) sur l'insert de saisie (3).

8. Dispositif de préhension selon l'une quelconque des revendications précédentes, dans lequel les boîtiers de saisie (5) sont réalisés en une seule pièce dans un bloc (8), en un nombre qui correspond au nombre des bouteilles (7) à saisir simultanément, et en ce que les inserts de saisie (3) de tous les organes de saisie femelles (5) sont sollicités conjointement par la force nécessaire pour saisir les bouteilles, caractérisé en ce que le bloc (8) forme une partie inférieure du dispositif de préhension, sur laquelle repose une partie supérieure (17) en forme de couvercle, et en ce que le diaphragme (1) est fixé sur la face intérieure de la partie supérieure (17) et agit sur les inserts de saisie (3) au moyen d'une plaque (18) mobile en direction axiale.

9. Dispositif de préhension selon l'une quelconque des revendications précédentes, comportant un insert de saisie (3) qui présente plusieurs traversées (14) réparties à la périphérie, caractérisé en ce que les traversées (14) sont séparées par rapport à l'intérieur de l'insert de saisie (3) au moyen d'une couche protectrice (16).

10. Dispositif de préhension selon la revendication 9, caractérisé en ce que la couche protectrice (16) est réalisée en une seule pièce avec l'insert de saisie (3).
